# EUROPEAN PATENT APPLICATION

(11) **EP 4 841 228 A1**
(43) Date of publication of application: **18.11.2026**
(21) Application number: 24917170.3
(22) Date of filing: 10.01.2024
(51) Int. Cl.: G01L 3/10

(54) **SENSOR DEVICE**

(71) Applicant: JTEKT CORPORATION, Kariya-shi, Aichi 448-8652 (JP)
(72) Inventor: OKADA Yuuki, Kariya-shi, Aichi 448-8652 (JP)
(74) Representative: Winter, Brandl - Partnerschaft mbB
(86) International application number: PCT/JP2024/000224
(87) International publication number: WO 2025/150105

(57) **Abstract**

A magnetic shield (42) includes a first split shield (91) and a second split shield (92) that are divided in an axial direction of a rotating shaft. The first split shield (91) includes a first end wall (101) that contacts a sensor body (41) in the axial direction, and a first side wall (102) that extends from a peripheral edge of the first end wall (101) toward the second split shield (92). The second split shield (92) includes a second end wall (111) that covers the sensor body (41) from a side opposite to the first end wall (101), and a second side wall (112) that extends from a peripheral edge of the second end wall (111) toward the first split shield (91). The second split shield (92) further includes a pressing portion (117) configured to press the sensor body (41) toward the first split shield (91).

## Description

### TECHNICAL FIELD

The present disclosure relates to sensor devices.

### BACKGROUND ART

Conventionally, a sensor device that detects torque applied to a rotating shaft has been known in the art. Such a rotating shaft includes an input shaft and an output shaft coupled to the input shaft via a torsion bar. For example, the sensor device described in Patent Document 1 includes a permanent magnet that rotates together with the input shaft, a pair of yoke cores that rotates together with the output shaft, and a sensor body fixed to a housing that rotatably accommodates the rotating shaft. The sensor body includes a pair of magnetic flux collecting rings each disposed on an outer periphery of a corresponding one of the pair of yoke cores, and a magnetic sensor that generates a signal corresponding to magnetic flux passing through the pair of magnetic flux collecting members. Torque applied to the rotating shaft is detected based on the signal output from the magnetic sensor.

As described above, the sensor device of Patent Document 1 detects torque based on magnetic flux. Therefore, for example, when the sensor device is affected by an external magnetic field, it may not be able to detect torque accurately. Accordingly, for example, Patent Document 2 discloses enclosing the entire sensor device with a magnetic shield made of a magnetic material.

### Related Art Documents

### Patent Documents

Patent Document 1: Japanese Unexamined Patent Application Publication No. 2023-110681 (JP 2023-110681 A)
Patent Document 2: Japanese Unexamined Patent Application Publication No. 2003-149062 (JP 2003-149062 A)

### SUMMARY OF THE INVENTION

### Problem to be Solved by the Invention

Although Patent Document 2 discloses enclosing the entire sensor device with a magnetic shield, a specific mounting configuration of the magnetic shield is not disclosed. Therefore, for example, components of the sensor device may rattle within the magnetic shield.

### Means for Solving the Problem

One aspect of the present disclosure provides a sensor device configured to detect torque applied to a rotating shaft. The rotating shaft includes a first shaft and a second shaft connected to the first shaft via a torsion bar. The sensor device includes a permanent magnet configured to rotate together with the first shaft, a first yoke core and a second yoke core that are configured to rotate together with the second shaft, and a fixed unit fixed to a housing that accommodates the rotating shaft. The fixed unit includes a sensor body and a magnetic shield fixed to the housing and covering the sensor body. The sensor body includes a first magnetic flux collecting member disposed with a gap from the first yoke core, a second magnetic flux collecting member disposed with a gap from the second yoke core, and a magnetic sensor configured to generate a signal corresponding to magnetic flux passing through the first magnetic flux collecting member and the second magnetic flux collecting member. The magnetic shield includes a first split shield and a second split shield that are divided in an axial direction of the rotating shaft. The first split shield includes a first end wall that contacts the sensor body in the axial direction, and a first side wall that extends from a peripheral edge of the first end wall toward the second split shield. The second split shield includes a second end wall that covers the sensor body from a side opposite to the first end wall, and a second side wall that extends from a peripheral edge of the second end wall toward the first split shield. The second split shield further includes a pressing portion configured to press the sensor body toward the first split shield.

### BRIEF DESCRIPTION OF THE DRAWINGS

[FIG. 1] FIG. 1 is an exploded perspective view of a sensor device according to an embodiment.
[FIG. 2] FIG. 2 is a sectional view of the sensor device of FIG. 1, taken at a position passing through its axis.
[FIG. 3] FIG. 3 is an exploded perspective view of a fixed unit included in the sensor device of FIG. 1.
[FIG. 4] FIG. 4 is a sectional view of the sensor device of FIG. 1, taken at a position passing through its pressing portion.
[FIG. 5] FIG. 5 is an enlarged sectional view of a fitting portion between a first split shield and a second split shield in the sensor device of FIG. 2.

### MODES FOR CARRYING OUT THE INVENTION

An embodiment of a sensor device will be described below with reference to the drawings. The term "tubular" as used in the present specification can refer to any shape that is tubular as a whole, and includes a tubular shape formed by combining a plurality of parts and a tubular shape having a cut or the like in its portion, such as a C-shape. The "tubular" shape includes a circular shape, an elliptical shape, and a polygonal shape having sharp or rounded corners, as viewed in an axial direction, but are not limited to these. The term "annular" as used in the present specification can refer to any shape that is annular as a whole, and includes an annular shape formed by combining a plurality of parts and an annular shape having a cut or the like in its portion, such as a C-shape. The "annular" shape includes a circular shape, an elliptical shape, and a polygonal shape having sharp or rounded corners, as viewed in an axial direction, but are not limited to these. The term "facing" as used in the present specification means that surfaces or members are positioned opposite each other, and includes not only a case where they are completely opposite each other but also a case where they are partially opposite each other. The term "facing" as used in the present specification includes both a case where another member is interposed between two portions and a case where nothing is interposed between the two portions.

### (Overall Configuration)

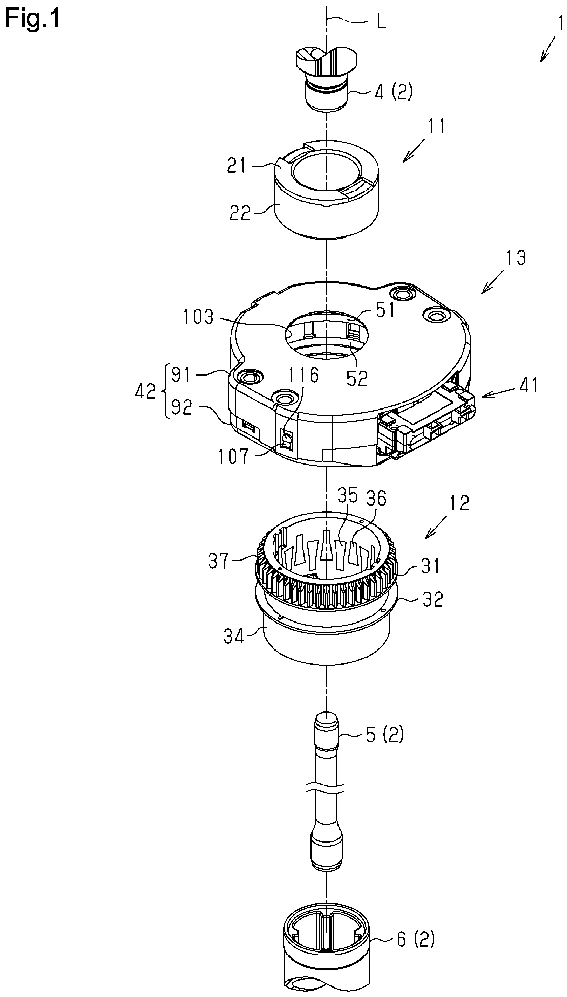

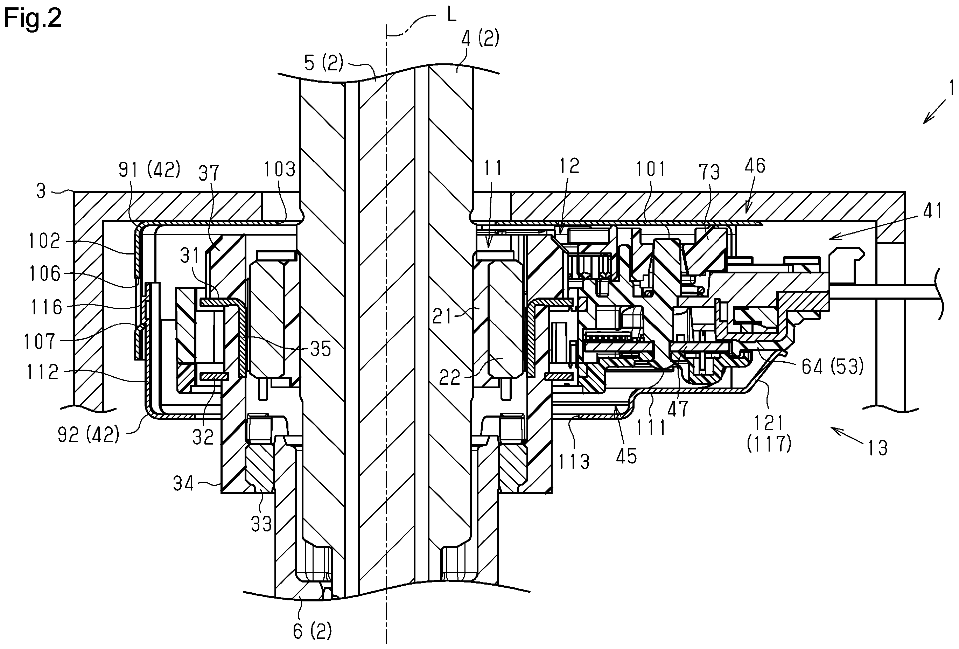

As shown in FIGS. 1 and 2, a sensor device 1 is provided around a rotating shaft 2. The rotating shaft 2 is rotatably accommodated in a housing 3. The rotating shaft 2 includes an input shaft 4 serving as a first shaft, a torsion bar 5, and an output shaft 6 serving as a second shaft. The input shaft 4 and the output shaft 6 are coupled to each other via the torsion bar 5. The input shaft 4, the torsion bar 5, and the output shaft 6 are located on the same axis L.

The rotating shaft 2 of the present embodiment is a pinion shaft of a rack-and-pinion mechanism constituting a steering system of a vehicle, and the housing 3 is a sensor housing fixed to a rack housing that rotatably supports the pinion shaft. **In** the following description, one end side of the rotating shaft 2, that is, one side in the direction along the axis L, is referred to as an upper side, and the other end side of the rotating shaft 2, that is, the other side in the direction along the axis L, is referred to as a lower side. A steering wheel is coupled to an upper end portion of the pinion shaft via an intermediate shaft and a column shaft. In another embodiment, the rotating shaft 2 may be a column shaft.

The sensor device 1 includes a magnet assembly 11 that rotates together with the input shaft 4, a magnetic yoke assembly 12 that rotates together with the output shaft 6, and a fixed unit 13 fixed to the housing 3. That is, even when the rotating shaft 2 rotates, the fixed unit 13 does not rotate. When torque is applied to the rotating shaft 2 through operation of the steering wheel by the driver, the input shaft 4 and the output shaft 6 rotate relative to each other with twisting of the torsion bar 5. As a result, the relative circumferential position between the magnet assembly 11 and the magnetic yoke assembly 12 changes, and magnetic flux passing through a first magnetic flux collecting member 51 and a second magnetic flux collecting member 52 of the fixed unit 13, described later, changes. That is, the magnetic flux passing through the first magnetic flux collecting member 51 and the second magnetic flux collecting member 52 changes according to the magnitude of the input torque. The sensor device 1 detects torque applied to the rotating shaft 2 based on such a change in magnetic flux. The sensor device 1 of the present embodiment is configured to detect the rotation angle of the rotating shaft 2 (steering angle) in addition to the torque applied to the rotating shaft 2 (steering torque). The components of the sensor device 1 will be described in detail below.

### (Magnet Assembly 11)

The magnet assembly 11 includes a magnet holder 21 fixed to an outer peripheral surface of the input shaft 4, and a permanent magnet 22 held by the magnet holder 21. The permanent magnet 22 has a tubular shape. In the present embodiment, the permanent magnet 22 has a circular shape as viewed in the axial direction. The permanent magnet 22 is magnetized along a radial direction orthogonal to the axial direction of the rotating shaft 2 such that magnetic poles of different polarities are alternately arranged in the circumferential direction. In another embodiment, the permanent magnet 22 may be directly fixed to an outer peripheral surface of the input shaft 4 so as to rotate together with the input shaft 4. The permanent magnet 22 may be a plurality of plate-shaped magnets.

### (Magnetic Yoke Assembly 12)

The magnetic yoke assembly 12 includes a first yoke core 31, a second yoke core 32, a collar 33, and a yoke holder 34 that holds the first yoke core 31, the second yoke core 32, and the collar 33.

The first yoke core 31 and the second yoke core 32 are made of a magnetic material and have an annular shape. In the present embodiment, the first yoke core 31 and the second yoke core 32 have a circular shape as viewed in the axial direction. The first yoke core 31 and the second yoke core 32 are spaced apart from each other in the axial direction.

The first yoke core 31 and the second yoke core 32 are arranged radially outward of the permanent magnet 22 with a gap from the permanent magnet 22. The first yoke core 31 and the second yoke core 32 respectively have a plurality of claw portions 35, 36 facing the permanent magnet 22 in the radial direction. The claw portions 35, 36 protrude in directions toward each other. The claw portions 35 are formed on the first yoke core 31 at equal intervals in the circumferential direction, and the claw portions 36 are formed on the second yoke core 32 at equal intervals in the circumferential direction. The claw portions 35 and the claw portions 36 are alternately arranged in the circumferential direction.

The collar 33 is made of, for example, a metal material and has an annular shape. In the present embodiment, the collar 33 has a circular shape as viewed in the axial direction. The collar 33 is disposed below the first yoke core 31 and the second yoke core 32 with a gap from the first yoke core 31 and the second yoke core 32. The collar 33 is fixed to the outer periphery of an upper end portion of the output shaft 6 so as to rotate together with the output shaft 6. The magnetic yoke assembly 12 is thus fixed to the outer periphery of the output shaft 6 via the collar 33 so as to rotate together with the output shaft 6.

The yoke holder 34 is made of, for example, a resin material and has a tubular shape. In the present embodiment, the yoke holder 34 has a circular shape as viewed in the axial direction. The yoke holder 34 holds the first yoke core 31, the second yoke core 32, and the collar 33 such that inner surfaces of the claw portions 35, 36 and an inner peripheral surface of the collar 33 are exposed on the inner peripheral side of the yoke holder 34. The yoke holder 34 includes a gear portion 37 including a plurality of external teeth protruding from the outer periphery of the yoke holder 34. The gear portion 37 is provided at an upper end portion of the yoke holder 34.

The yoke holder 34 of the present embodiment is a resin molded article formed by insert molding using the first yoke core 31, the second yoke core 32, and the collar 33 as inserts. In another embodiment, the first yoke core 31 and the second yoke core 32 are not used as inserts, and the first yoke core 31, the second yoke core 32, and the collar 33 may instead be assembled to the yoke holder 34 formed separately.

### (Fixed Unit 13)

As shown in FIGS. 2 to 4, the fixed unit 13 includes a sensor body 41 and a magnetic shield 42 that is fixed to the housing 3 and covers substantially the entire sensor body 41. The magnetic shield 42 is fixed to the housing 3 by, for example, bolts, not shown. The magnetic shield 42 will be described in detail later.

The sensor body 41 includes a magnetic flux collecting assembly 45, a gear assembly 46, and a circuit board 47. The magnetic flux collecting assembly 45 includes the first magnetic flux collecting member 51, the second magnetic flux collecting member 52, a first collecting-member holder 53 that holds the first magnetic flux collecting member 51, and a second collecting-member holder 54 that holds the second magnetic flux collecting member 52.

The first magnetic flux collecting member 51 and the second magnetic flux collecting member 52 are made of a magnetic material and have an annular shape. **In** the present embodiment, the first magnetic flux collecting member 51 and the second magnetic flux collecting member 52 have a C-shape as viewed in the axial direction. The first magnetic flux collecting member 51 and the second magnetic flux collecting member 52 are spaced apart from each other in the axial direction. The first magnetic flux collecting member 51 is disposed radially outward of the first yoke core 31 with a gap therebetween. The second magnetic flux collecting member 52 is disposed radially outward of the second yoke core 32 with a gap therebetween. The first magnetic flux collecting member 51 has two first protrusions 61 protruding in the radial direction, and the second magnetic flux collecting member 52 has two second protrusions 62 protruding in the radial direction.

The first collecting-member holder 53 includes an annular first frame portion 63 and a support portion 64 provided on the outer periphery of the first frame portion 63 and continuous with the first frame portion 63. In the present embodiment, the first frame portion 63 has a circular shape as viewed in the axial direction. The first frame portion 63 holds the first magnetic flux collecting member 51 such that an inner peripheral surface of the first magnetic flux collecting member 51 is exposed on the inner peripheral side of the first collecting-member holder 53. The support portion 64 is provided with a connector for connecting the sensor device 1 to an external control device or the like.

The second collecting-member holder 54 includes an annular second frame portion 65 and a cover portion 66 provided on the outer periphery of the second frame portion 65 and continuous with the second frame portion 65. **In** the present embodiment, the second frame portion 65 has a circular shape as viewed in the axial direction. The second frame portion 65 holds the second magnetic flux collecting member 52 such that an inner peripheral surface of the second magnetic flux collecting member 52 is exposed on the inner peripheral side of the second collecting-member holder 54. When the first collecting-member holder 53 and the second collecting-member holder 54 are assembled together, the first protrusions 61 and the second protrusions 62 face each other in the axial direction.

In the present embodiment, the first collecting-member holder 53 is a resin molded article formed by insert molding using the first magnetic flux collecting member 51 as an insert, and the second collecting-member holder 54 is a resin molded article formed by insert molding using the second magnetic flux collecting member 52 as an insert. In another embodiment, the first magnetic flux collecting member 51 need not be used as an insert, and the first magnetic flux collecting member 51 may be assembled to the first collecting-member holder 53 formed separately. Similarly, the second magnetic flux collecting member 52 need not be used as an insert, and the second magnetic flux collecting member 52 may be assembled to the second collecting-member holder 54 formed separately.

The gear assembly 46 includes two driven gears 71, 72 and a support plate 73. The gear assembly 46 is held above the support portion 64 of the first collecting-member holder 53. Each of the driven gears 71, 72 meshes with the gear portion 37 of the magnetic yoke assembly 12. The driven gears 71, 72 have different numbers of teeth. Accordingly, when the gear portion 37 (output shaft 6) rotates, the rotation angle of the driven gear 71 and the rotation angle of the driven gear 72 differ from each other. A sensor magnet, not shown, is fixed to each of the driven gears 71, 72 so as to rotate together therewith.

The support plate 73 has a flat plate shape. The support plate 73 rotatably supports the driven gears 71, 72. The support plate 73 is fixed to the first collecting-member holder 53 such that the driven gears 71, 72 are sandwiched between the support plate 73 and the support portion 64 of the first collecting-member holder 53.

The circuit board 47 has a flat plate shape. Various circuit elements including a magnetic sensor 81 and two rotation sensors 82, 83 are mounted on the circuit board 47. The circuit board 47 is held below the support portion 64 of the first collecting-member holder 53. The cover portion 66 of the second collecting-member holder 54 covers the circuit board 47 from below.

The magnetic sensor 81 is, for example, a Hall sensor or a magnetoresistive sensor. The magnetic sensor 81 is mounted on the circuit board 47 in a region between the first protrusion 61 and the second protrusion 62. **In** another embodiment, a redundant magnetic sensor separate from the magnetic sensor 81 may be mounted on the circuit board 47 in a region between the other first protrusion 61 and the other second protrusion 62. As described above, the magnetic flux passing through the first magnetic flux collecting member 51 and the second magnetic flux collecting member 52 changes according to the magnitude of torque input to the rotating shaft 2. The magnetic sensor 81 generates a signal corresponding to this magnetic flux, that is, a signal indicating torque applied to the rotating shaft 2.

The rotation sensors 82, 83 are, for example, Hall sensors or magnetoresistive sensors. On the circuit board 47, the rotation sensor 82 is mounted in a region facing the sensor magnet that rotates together with the driven gear 71, and the rotation sensor 83 is mounted in a region facing the sensor magnet that rotates together with the driven gear 72. As described above, the driven gears 71, 72 rotate in response to rotation of the magnetic yoke assembly 12. The rotation sensors 82, 83 each generate a signal indicating the rotation angle of the corresponding driven gear 71 or 72, that is, the rotation angle of the rotating shaft 2.

### (Magnetic Shield 42)

Next, the configuration of the magnetic shield 42 will be described. The magnetic shield 42 includes a first split shield 91 and a second split shield 92 that are divided in the axial direction of the rotating shaft 2. The first split shield 91 covers the sensor body 41 from the upper side and the outer peripheral side, and the second split shield 92 covers the sensor body 41 from the lower side and the outer peripheral side. The first split shield 91 and the second split shield 92 are each formed by, for example, bending a metal plate made of a magnetic material.

The first split shield 91 includes a first end wall 101 that contacts the sensor body 41 in the axial direction, and a first side wall 102 that extends from a peripheral edge of the first end wall 101 toward the second split shield 92. The first end wall 101 has a generally circular flat plate shape. The first end wall 101 has a first through hole 103 extending therethrough in the axial direction. The input shaft 4 is rotatably inserted through the first through hole 103. The first end wall 101 of the present embodiment contacts the magnetic flux collecting assembly 45 and the gear assembly 46 of the sensor body 41 from the upper side. Specifically, the first end wall 101 contacts a portion of the first frame portion 63 of the first collecting-member holder 53 and a portion of the support plate 73 of the gear assembly 46 from the upper side.

The first side wall 102 has a generally tubular shape. **In** the present embodiment, the first side wall 102 has a C-shape as viewed in the axial direction. A portion of the first side wall 102 is cut away to suppress interference with the support portion 64 of the first collecting-member holder 53. The first side wall 102 includes a first base portion 104 and a plurality of first extension portions 105 extending from a distal end of the first base portion 104. The first side wall 102 of the present embodiment includes three first extension portions 105. The first extension portions 105 extend farther toward the second split shield 92 than the first base portion 104. The plurality of first extension portions 105 is arranged at substantially equal angular intervals in the circumferential direction.

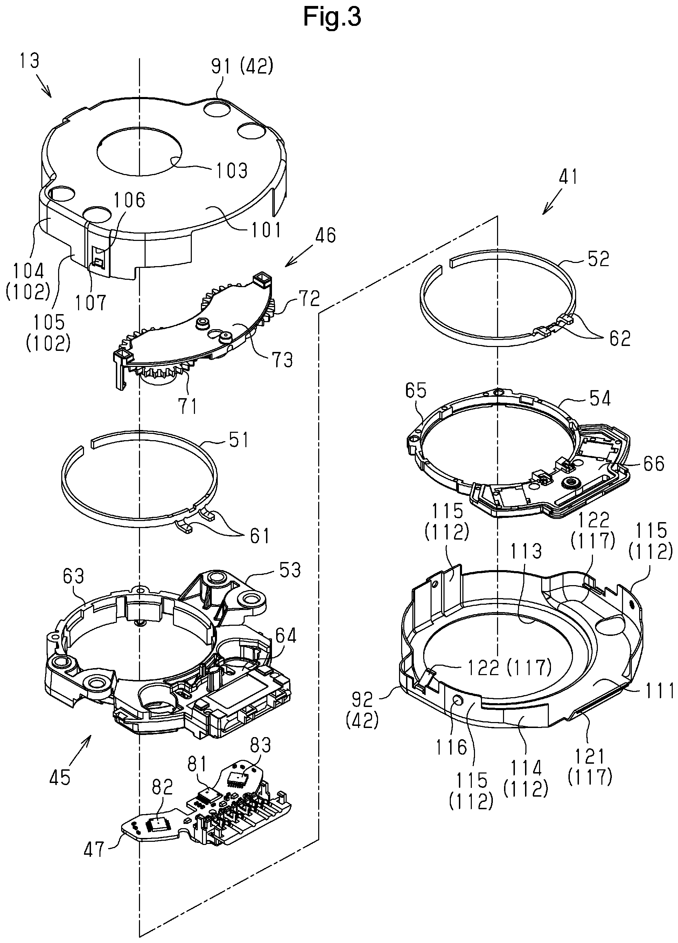

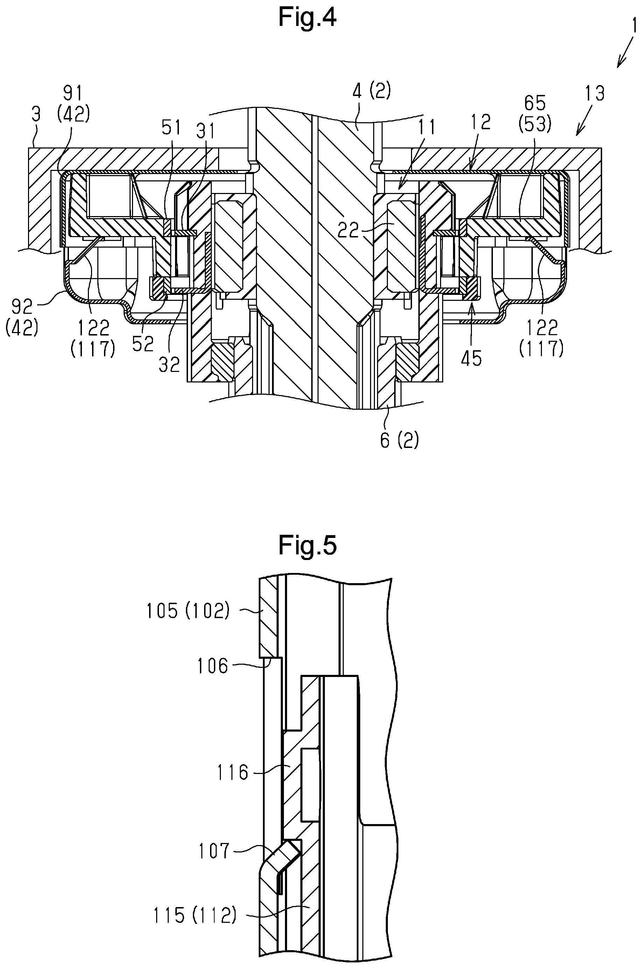

As shown in FIGS. 3 and 5, each of the first extension portions 105 has a mating hole 106 extending therethrough in the radial direction of the rotating shaft 2. The mating hole 106 has, for example, a rectangular shape as viewed in the radial direction. A locking portion 107 is formed on an inner peripheral edge of each mating hole 106. Each locking portion 107 of the present embodiment is formed on a lower portion of the inner peripheral edge of the corresponding mating hole 106. Each locking portion 107 is, for example, a leaf spring formed by bending a portion of the corresponding first extension portion 105, and is elastically deformable in the radial direction. When the locking portion 107 is not elastically deformed, the locking portion 107 is inclined radially inward relative to the first side wall 102 at an angle such that a distal end of the locking portion 107 interferes with a second side wall 112 described later. The plurality of locking portions 107 is arranged at substantially equal angular intervals in the circumferential direction.

As shown in FIGS. 2 and 3, the second split shield 92 includes a second end wall 111 that covers the sensor body 41 from a side opposite to the first end wall 101, and the second side wall 112 that extends from a peripheral edge of the second end wall 111 toward the first split shield 91. The second end wall 111 has a generally circular flat plate shape. The second end wall 111 covers the sensor body 41 from the lower side. The second end wall 111 has a second through hole 113 extending therethrough in the axial direction. The magnetic yoke assembly 12 is rotatably inserted through the second through hole 113. The second end wall 111 of the present embodiment does not contact the sensor body 41. **In** another embodiment, the second end wall 111 may contact, for example, the magnetic flux collecting assembly 45.

The second side wall 112 has a generally tubular shape. The second side wall 112 of the present embodiment is tubular and slightly smaller than the first side wall 102. In the present embodiment, the second side wall 112 has a C-shape as viewed in the axial direction. A portion of the second side wall 112 is cut away to suppress interference with the support portion 64 of the second collecting-member holder 54. The second side wall 112 includes a second base portion 114 and a plurality of second extension portions 115 extending from a distal end of the second base portion 114. **In** the present embodiment, the position of the distal end of the second base portion 114 coincides with the position of the distal end of the first base portion 104, as viewed in the radial direction. The first side wall 102 and the second side wall 112 thus cover the sensor body 41 such that the sensor body 41 is not visible from the outer peripheral side. **In** another embodiment, the first base portion 104 and the second base portion 114 may or need not face each other in the radial direction.

The second side wall 112 of the present embodiment includes three second extension portions 115. The second extension portions 115 extend farther toward the first split shield 91 than the second base portion 114. The plurality of second extension portions 115 is arranged at substantially equal angular intervals in the circumferential direction. Each of the second extension portions 115 is provided at a position facing the corresponding first extension portion 105 in the radial direction. Accordingly, when the first split shield 91 attempts to move relative to the second split shield 92 in the radial direction, the first extension portion 105 abuts the second extension portion 115, thereby restricting movement of the first split shield 91. That is, the first extension portions 105 and the second extension portions 115 are configured to restrict relative movement of the first split shield 91 with respect to the second split shield 92 in the radial direction.

As shown in FIGS. 3 and 5, each of the second extension portions 115 has a protrusion 116 protruding outward in the radial direction. Each protrusion 116 is inserted into the mating hole 106 of the corresponding first extension portion 105. Each locking portion 107 engages the corresponding protrusion 116 in the axial direction so as to restrict separation of the first split shield 91 from the second split shield 92 in the axial direction. Specifically, a distal end of each locking portion 107 engages an outer peripheral surface of the corresponding protrusion 116 from the lower side. As described above, when the locking portion 107 is not elastically deformed, the locking portion 107 is inclined such that the distal end of the locking portion 107 interferes with the second side wall 112. Therefore, the locking portion 107 presses the corresponding first extension portion 105 radially inward.

As shown in FIGS. 2 to 4, the second split shield 92 further includes a plurality of pressing portions 117 that presses the sensor body 41 toward the first split shield 91. Each pressing portion 117 is, for example, a leaf spring formed by bending a portion of the second split shield 92, and is elastically deformable in the axial direction. In the present embodiment, the second split shield 92 includes three pressing portions 117. The pressing portions 117 are formed on the second split shield 92 at substantially equal angular intervals in the circumferential direction. Specifically, the pressing portions 117 include one end-wall pressing portion 121 formed on the second end wall 111, and two side-wall pressing portions 122 formed on the second side wall 112. The end-wall pressing portion 121 presses the support portion 64 of the first collecting-member holder 53 toward the first split shield 91 (see FIG. 2). Each of the side-wall pressing portions 122 presses the first frame portion 63 of the first collecting-member holder 53 toward the first split shield 91 (see FIG. 4).

### (Functions and Effects of Embodiment)

Next, functions and effects of the present embodiment will be described.
(1) The second split shield 92 includes the pressing portions 117 that press the sensor body 41 toward the first split shield 91.

With the above configuration, the sensor body 41 is pressed toward the first split shield 91 by the pressing portions 117 and is thereby pressed against the first end wall 101. As a result, rattling of the sensor body 41 within the magnetic shield 42 can be suppressed.

(2) Since the second split shield 92 includes the plurality of pressing portions 117 spaced apart from each other in the circumferential direction, rattling of the sensor body 41 within the magnetic shield 42 can be suitably suppressed.

(3) The first side wall 102 and the second side wall 112 include the first extension portions 105 and the second extension portions 115, respectively. Each of the first extension portions 105 faces the corresponding second extension portion 115 in the radial direction. Each of the second extension portions 115 has the protrusion 116 protruding in the radial direction. Each of the first extension portions 105 includes the locking portion 107 that engages the corresponding protrusion 116 in the axial direction so as to restrict separation of the first split shield 91 from the second split shield 92 in the axial direction.

With the above configuration, each locking portion 107 engages the corresponding protrusion 116 in the axial direction, thereby restricting separation of the first split shield 91 from the second split shield 92 in the axial direction. Accordingly, compared with, for example, a case where the first split shield 91 is fixed to the second split shield 92 using screws or the like, an increase in the number of parts of the sensor device 1 can be suppressed.

(4) The first extension portions 105 and the second extension portions 115 are configured to restrict relative movement of the first split shield 91 with respect to the second split shield 92 in the radial direction. The locking portions 107 are each configured to press the corresponding second extension portion 115 in the radial direction.

With the above configuration, since the second split shield 92 is pressed in the radial direction by the locking portions 107, play between the first split shield 91 and the second split shield 92 can be suppressed.

(5) Since the first split shield 91 includes the plurality of locking portions 107 spaced apart from each other in the circumferential direction, play between the first split shield 91 and the second split shield 92 can be suitably suppressed.

The present embodiment can be modified as follows. The present embodiment and the following modifications can be combined as long as no technical contradiction arises.
- In the above embodiment, the first magnetic flux collecting member 51 may have one first protrusion. Similarly, the second magnetic flux collecting member 52 may have one second protrusion.
   - In the above embodiment, the first magnetic flux collecting member 51 may face the first yoke core 31 in the axial direction. In this case, the first magnetic flux collecting member 51 may have, for example, a flat plate shape, and its shape may be changed as appropriate. Similarly, the second magnetic flux collecting member 52 may face the second yoke core 32 in the axial direction.
   - In the above embodiment, the shapes of the first collecting-member holder 53 and the second collecting-member holder 54 may be changed as appropriate. For example, the first collecting-member holder 53 and the second collecting-member holder 54 need not include the support portion 64 and the cover portion 66, respectively. Instead of the first collecting-member holder 53 and the second collecting-member holder 54, the magnetic flux collecting assembly 45 may include a single collecting-member holder that holds both the first magnetic flux collecting member 51 and the second magnetic flux collecting member 52.
   - In the above embodiment, the first side wall 102 includes three first extension portions 105. However, the present disclosure is not limited to this. The first side wall 102 may include a single first extension portion 105. The first side wall 102 may include two or four or more first extension portions 105. Similarly, the second side wall 112 may include a single second extension portion 115, or may include two or four or more second extension portions 115. When the first side wall 102 includes a single first extension portion 105 and the second side wall 112 includes a single second extension portion 115, each of the first extension portion 105 and the second extension portion 115 may extend over a circumferential range of greater than 180° around the axis L. This makes it possible to restrict relative movement of the first split shield 91 with respect to the second split shield 92 in the radial direction.
   - In the above embodiment, the first end wall 101 may contact either the magnetic flux collecting assembly 45 or the gear assembly 46. The first end wall 101 may contact a portion of the sensor body 41 other than the magnetic flux collecting assembly 45 and the gear assembly 46.
   - In the above embodiment, the locking portion 107 may be configured not to press the second extension portion 115 in the radial direction. Even in this case, the locking portion 107 may be elastically deformable in the radial direction.
- In the above embodiment, the first extension portion 105 is provided with the mating hole 106 and the second extension portion 115 is provided with the protrusion 116. However, the present disclosure is not limited to this. The first extension portion 105 may be provided with a protrusion protruding radially inward, and the second extension portion 115 may be provided with a mating hole. In this case, a locking portion formed at the mating hole in the second extension portion 115 engages the protrusion from the upper side.
   - In the above embodiment, the magnetic shield 42 need not be provided with the mating holes 106 and the protrusions 116. In this case, for example, the first split shield 91 may be fixed to the second split shield 92 using screws.
   - In the above embodiment, the rotation sensors 82, 83 may be sensors other than those that detect magnetic flux, such as rotary encoders, as long as they can detect the rotation angles of the driven gears 71, 72. **In** this case, the sensor magnets that rotate together with the driven gears 71, 72 may be omitted.
   - In the above embodiment, the sensor device 1 is configured to detect the rotation angle of the rotating shaft 2 in addition to the torque applied to the rotating shaft 2. However, the sensor device 1 may be configured to detect torque alone. **In** this case, a configuration for detecting the rotation angle of the gear assembly 46 and the like may be omitted.
   - In the above embodiment, the magnet assembly 11 is fixed to the input shaft 4, and the magnetic yoke assembly 12 is fixed to the output shaft 6. However, the magnet assembly 11 may be fixed to the output shaft 6, and the magnetic yoke assembly 12 may be fixed to the input shaft 4. In this case, the input shaft 4 corresponds to the second shaft, and the output shaft 6 corresponds to the first shaft.

Additional technical aspects derivable from the above embodiment and modifications are described below.
(Supplementary Note 1) The sensor body may further include a holder that holds the first magnetic flux collecting member and the second magnetic flux collecting member, and the pressing portion may be configured to press the holder toward the first split shield.

(Supplementary Note 2) The pressing portion may be one of a plurality of pressing portions, and the plurality of pressing portions may be spaced apart from each other in a circumferential direction of the rotating shaft.
(Supplementary Note 3) The locking portion may be one of a plurality of locking portions, and the plurality of locking portions may be spaced apart from each other in the circumferential direction of the rotating shaft.

## Claims

1. A sensor device configured to detect torque applied to a rotating shaft, wherein:
the rotating shaft includes a first shaft and a second shaft connected to the first shaft via a torsion bar;
the sensor device includes
a permanent magnet configured to rotate together with the first shaft,
a first yoke core and a second yoke core configured to rotate together with the second shaft, and
a fixed unit fixed to a housing that accommodates the rotating shaft;
the fixed unit includes
a sensor body, and
a magnetic shield fixed to the housing and covering the sensor body;
the sensor body includes
a first magnetic flux collecting member disposed with a gap from the first yoke core,
a second magnetic flux collecting member disposed with a gap from the second yoke core, and
a magnetic sensor configured to generate a signal corresponding to magnetic flux passing through the first magnetic flux collecting member and the second magnetic flux collecting member;
the magnetic shield includes a first split shield and a second split shield that are divided in an axial direction of the rotating shaft;
the first split shield includes a first end wall that contacts the sensor body in the axial direction, and a first side wall that extends from a peripheral edge of the first end wall toward the second split shield;
the second split shield includes a second end wall that covers the sensor body from a side opposite to the first end wall, and a second side wall that extends from a peripheral edge of the second end wall toward the first split shield; and
the second split shield further includes a pressing portion configured to press the sensor body toward the first split shield.

2. The sensor device according to claim 1, wherein:
the first side wall and the second side wall include a first extension portion and a second extension portion, respectively;
the first extension portion and the second extension portion face each other in a radial direction orthogonal to the axial direction;
one of the first extension portion and the second extension portion includes a protrusion that protrudes in the radial direction; and
the other of the first extension portion and the second extension portion includes a locking portion configured to engage the protrusion in the axial direction so as to restrict separation of the first split shield from the second split shield in the axial direction.

3. The sensor device according to claim 2, wherein:
the first extension portion and the second extension portion are configured to restrict relative movement of the first split shield with respect to the second split shield in the radial direction; and
the locking portion is further configured to press the one of the first extension portion and the second extension portion in the radial direction.
